# EUROPÄISCHE PATENTSCHRIFT

(11) **EP 0 696 959 B1**
(45) Veröffentlichungstag und Bekanntmachung des Hinweises auf die Patenterteilung: **15.01.1997**
(21) Anmeldenummer: 94911165.2
(22) Anmeldetag: 14.03.1994
(51) Int. Cl.: B29D 31/00, B29C 69/00, B23Q 3/08

(54) **VERFAHREN ZUM BEARBEITEN EINES MIT MIKROVERTIEFUNGEN VERSEHENEN KUNSTSTOFF-HALBZEUGS**
PROCESS FOR MACHINING A SEMI-FINISHED PLASTIC PRODUCT WITH MICRO-RECESSES
PROCEDE POUR LA TRANSFORMATION D'UN SEMI-PRODUIT EN MATIERE PLASTIQUE PRESENTANT DES MICRO-CAVITES

(30) Priorität: 23.04.1993 DE 4313328
(43) Veröffentlichungstag der Anmeldung: 21.02.1996
(73) Patentinhaber: Kernforschungszentrum Karlsruhe GmbH, D-76133 Karlsruhe (DE)
(72) Erfinder: SIEBER, Ulrich, D-76227 Karlsruhe (DE); REINECKE, Holger, D-44287 Dortmund (DE)
(74) Vertreter: Rückert, Friedrich, Dr.
(86) Internationale Anmeldenummer: EP9400782
(87) Internationale Veröffentlichungsnummer: WO9425257

(56) Entgegenhaltungen:
- EP-A- 0 484 068
- DE-C- 4 135 676

## Beschreibung

Die Erfindung betrifft ein Verfahren zum Bearbeiten eines auf einer Seite mit Mikrovertiefungen versehenen Kunststoff-Halbzeugs nach dem Oberbegriff des Patentanspruchs 1.

Die Erfindung bezweckt, das durch das Patent 4135676 geschützte Verfahren weiter auszugestalten.

Neben dem im Hauptpatent angegebene Polymethylmethacrylat (PMMA) als Kunststoff-Halbzeug kann dieses auch aus Polyoxymethylen (POM), Polyetheretherketon (PEEK), Polyethersulfon (PES), Polycarbonat (PC) oder anderen Spritz- und Reaktionsgießmaterialien bestehen.

Anstelle von Leim, bevorzugt Fischleim, kann eine zwischen 35° C und 180° C schmelzende Substanz, wie ein Polyethylenglycol (PEG), ein Polyvinylalkohol (PVA) oder ein höherer Alkohol verwendet werden. Mit einer dieser Substanzen wird das - bevorzugt auf einer erhöhten Temperatur unterhalb 140° C gehaltene - Kunststoff-Halbzeug übergossen, wobei die Mikrostruktur blasenfrei ausgefüllt wird. Das Befüllen von Mikrostrukturen mit hohem Aspektverhältnis kann durch Anlegen von Vakuum unterstützt werden.

Als Lösemittel für PEG, PVA und höhere Alkohole ist Wasser geeignet. Damit lassen sich diese aushärtbaren Substanzen bei einer Temperatur unterhalb 60° C umweltfreundlich aus dem Kunststoff-Halbzeug herauslösen, wobei das mikrostrukturierte Kunststoff-Halbzeug nicht beeinträchtigt wird.

Ferner sind solche Substanzen verwendbar, die durch eine chemische Reaktion aushärten, jedoch in einem gegenüber dem für das Halbzeug verwendeten Kunststoff inerten Lösemittel bei einer Temperatur unterhalb 140° C löslich bleiben, wie PMMA.

Als Lösemittel für PMMA sind z. B. Ether, Ester und Ketone geeignet. Damit lassen sich diese aushärtbaren Substanzen bei einer Temperatur unterhalb 140° C aus dem Kunststoff-Halbzeug herauslösen, wobei das mikrostrukturierte Kunststoff-Halbzeug nicht beeinträchtigt wird.

Die für das Halbzeug verwendeten Kunststoffe sind in der Regel durchsichtig; auf das Einfärben dieser Kunststoffe wird im allgemeinen verzichtet. Auch die zum Ausfüllen und Überdecken der Mikrostrukturen verwendeten aushärtbaren Substanzen sind praktisch durchsichtig, zumindest in den bei diesem Verfahren verwendeten Schichtdicken.

Um das Offengehen der Mikrostrukturen in durchsichtigen Kunststoff-Halbzeugen beim spanenden Bearbeiten, z. B. beim Präzisionsfräsen, visuell verfolgen zu können, kann der aushärtbaren Substanz ein Farbstoff beigegeben werden. Für PMMA sind z. B. die Farbstoffe Murexid, Dithizon, Bromphenolblau oder Bromkresolpurpur in einer Konzentration von 10⁻³ bis 5 Massenprozent geeignet.

Das erfindungsgemäße Verfahren hat folgende Vorteile:
- Durch die zum Ausfüllen und Überdecken der Mikrostruktur verwendeten aushärtbaren Substanzen werden beim spanenden Bearbeiten offene Mikrostrukturen mit praktisch gratfreien Öffnungen erzeugt.
- Das Kunststoff-Halbzeug kann bevorzugt bei Raumtemperatur spanend bearbeitet werden; eine Kühlung ist im allgemeinen nicht erforderlich.
- Die verwendeten Substanzen bleiben auch bei der vor dem spanabhebenden Werkzeug lokal und momentan auftretenden Temperaturerhöhung hinreichend fest, im Gegensatz zu Substanzen mit niedrigerer Schmelztemperatur, z. B. Wasser-Eis.
- Die bevorzugten Substanzen lassen sich ohne Veränderung der Mikrostruktur selektiv herauslösen; es entstehen nur Nebenprodukte, die ohne Umweltbelastung zu entsorgen sind.
- Durch Einfärben der durchsichtigen aushärtbaren Substanzen läßt sich die spanende Bearbeitung auf einfache Weise verfolgen.

Die Erfindung wird durch die folgenden Beispiele weiter verdeutlicht.

### Beispiel 1

Ein mikrostrukturiertes Kunststoff-Halbzeug aus PMMA wird mit einem bei 42° C bis 48° C schmelzenden PEG (Polyethylenglykol 1500, Fa. Merck, Darmstadt) ausgefüllt und überdeckt. PEG wird auf 58° C erhitzt und auf eine Stelle etwa in der Mitte des Halbzeugs aufgetragen. Das Halbzeug wird auf einer Temperatur von etwa 55° C gehalten. Das auseinanderfließende PEG füllt die Mikrostruktur blasenfrei aus. Das ausgefüllte Kunststoff-Halbzeug wird auf der planen Rückseite mittels einer Vakuum-Spannvorrichtung aufgespannt und präzise gehalten. Das mikrostrukturierte Kunststoff-Halbzeug wird Raumtemperatur bis zu einer vorgegebenen Höhe spanend bearbeitet. Die PEG-Schicht wird bei einer Temperatur von 30° C bis 60° C aus dem Kunststoff-Halbzeug mit vollentsalztem Wasser innerhalb weniger Minuten restlos herausgelöst.

### Beispiel 2

Ein mikrostrukturiertes Kunststoff-Halbzeug aus POM wird mit einem Gemisch von 15 g PVA (Polyvinylalkohol, MW 106.000 - 110.000 g/mol, Fa. Aldrich) in 20 ml H₂O, hergestellt bei 90° C, ausgefüllt und überdeckt. Das Gemisch wird auf 80° C erhitzt. Das auf etwa 80° C gehaltene Halbzeug wird mit dem geschmolzenen PVA/H₂O-Gemisch ausgegossen und überdeckt. Die weitere Bearbeitung verläuft analog zu Beispiel 1.

### Beispiel 3

Ein mikrostrukturierter Kunststoff-Halbzeug aus Polycarbonat wird mit einem bei 42° bis 48° C schmelzenden PEG ausgefüllt und überdeckt. Dem PEG werden 0,01 Massenprozent eines Farbstoffs, z. B. Bromphenolblau, beigegeben, der in die Schmelze eingerührt wird. Das gefärbte PEG wird auf 58° C erhitzt. Das auf 55° C gehaltene Halbzeug wird mit dem geschmolzenen PEG ausgegossen und überdeckt. Das mikrostrukturierte Kunststoff-Halbzeug wird bei Raumtemperatur spanend bearbeitet. Hervorstehende Teile des Kunststoff-Halbzeugs werden stellenweise vollständig freigelegt, wobei die späteren Öffnungen im Kunststoff-Halbzeug entstehen, deren Größe man wegen des Farbunterschiedes zwischen dem gefärbten PEG und dem Halbzeug aus opakem Polycarbonat visuell erkennen kann. Das PEG wird bei einer Temperatur von 30° bis 60° C aus dem Kunststoff-Halbzeug mit vollentsalztem Wasser innerhalb weniger Minuten restlos herausgelöst.

### Beispiel 4

Ein mikrostrukturiertes Kunststoff-Halbzeug aus PMMA mit großem Aspektverhältnis wird auf einer Temperatur von 50° C gehalten. In der Struktur wird ein unter Normaldruck bei 42° C schmelzendes PEG bei einem Druck von etwa 20 mbar bei einer Temperatur von 55° C in die Struktur eingebracht. Sobald die Struktur durch PEG blasenfrei ausgefüllt ist, wird das Kunststoff-Halbzeug analog zu Beispiel 1 weiterbearbeitet.

### Beispiel 5

Ein mikrostrukturiertes Kunststoff-Halbzeug aus PEEK (Polyetheretherketon) wird mit einem reaktionsfähigen PMMA (Polymethylmethacrylat, Plexit 60, Fa. Röhm, Darmstadt) ausgefüllt und überdeckt. Das PMMA wird vor dem Übergießen mit 1,5 Gewichtsprozent Dibenzoylperoxid, 1,0 Gewichtsprozent 2-Hydroxyethylmethycrylat und 1,0 Gewichtsprozent Dimethylanilin (alle Fa. Merck, Darmstadt) vermischt. Das ausgegossene und überdeckte Kunststoff-Halbzeug wird nach der Aushärtzeit von 75 Minuten analog zu Beispiel 1 mechanisch bearbeitet. Das PMMA wird bei einer Temperatur von 30° bis 60° C aus dem Kunststoff-Halbzeug mit Ethylacetat innerhalb weniger Minuten entfernt. Das Ethylacetat wird mittels Destillation zurückgewonnen.

## Patentansprüche

1. Verfahren zum Bearbeiten eines auf einer Seite mit Mikrovertiefungen versehenen Kunststoff-Halbzeugs mit den Schritten:
- Ausfüllen und Überdecken der Mikrovertiefungen in dem Kunststoff-Halbzeug mit einer aushärtenden Substanz,
- Aushärten der Substanz und spanendes Bearbeiten der nicht mit Mikrovertiefungen versehenen Seite des Kunststoff-Halbzeugs, bis die Mikrovertiefungen zumindest teilweise freigelegt sind,
- selektives Entfernen der ausgehärteten Substanz aus den Mikrovertiefungen,
dadurch gekennzeichnet, daß die Substanz zum Überdecken der Mikrovertiefungen in einem Temperaturbereich zwischen 35° C und 180° C aushärtet und daß das selektive Entfernen der Substanz aus den Mikrovertiefungen bei einer Temperatur unter 140° C erfolgt.

2. Verfahren nach Anspruch 1, dadurch gekennzeichnet, daß das Kunststoff-Halbzeug aus Polyoxymethylen, Polyethersulfon, Polycarbonat oder Polyetheretherketon besteht.

3. Verfahren nach den Ansprüchen 1 und 2, gekennzeichnet durch Ausfüllen und Überdecken der Mikrovertiefungen mit einer zwischen 35° C und 140° C schmelzenden Substanz, bevorzugt mit einem Polyethylenglycol, einem Polyvinylalkohol oder höherem Alkohol.

4. Verfahren nach den Ansprüchen 1 bis 3, dadurch gekennzeichnet, daß das selektive Entfernen der ausgehärteten Substanz mit einem Lösungsmittel, bevorzugt mit Wasser, bei einer Temperatur unter 60° C erfolgt.

5. Verfahren nach den Ansprüchen 1 und 2, gekennzeichnet durch Ausfüllen und Überdecken der Mikrovertiefungen mit einer unterhalb 180° C durch chemische Reaktion aushärtenden Substanz, bevorzugt Polymethylmethacrylat und selektives Entfernen der durch chemische Reaktion ausgehärteten Substanz bei einer Temperatur unterhalb 140° C.

6. Verfahren nach den Ansprüchen 1 bis 5, gekennzeichnet durch Zugeben eines Farbstoffes zu der zum Ausfüllen und Überdecken benutzten aushärtenden Substanz.

## Claims

1. Method of processing a semi-finished plastics material product, which is provided on one side with micro-recesses, having the following steps:
- filling and covering the micro-recesses in the semi-finished plastics material product with a curing substance,
- curing the substance and machining the side of the semi-finished plastics material product not provided with micro-recesses until the micro-recesses are at least partially exposed,
- selectively removing the cured substance from the micro-recesses,
characterised in that the substance for covering the micro-recesses cures in a temperature range of between 35° C and 180° C, and in that the selective removal of the substance from the micro-recesses is effected at a temperature below 140° C.

2. Method according to claim 1, characterised in that the semi-finished plastics material product is formed from polyoxymethylene, polyethersulphone, polycarbonate or polyetheretherketone.

3. Method according to claims 1 and 2, characterised by filling and covering the micro-recesses with a substance, which melts at between 35° C and 140° C, preferably with a polyethyleneglycol, a polyvinyl alcohol or higher alcohol.

4. Method according to claims 1 to 3, characterised in that the selective removal of the cured substance is effected with a solvent, preferably with water, at a temperature below 60° C.

5. Method according to claims 1 and 2, characterised by filling and covering the micro-recesses with a substance which cures by chemical reaction below 180° C, preferably polymethylmethacrylate, and selectively removing the substance, which has cured by chemical reaction, at a temperature below 140° C.

6. Method according to claims 1 to 5, characterised by adding a dyestuff to the curing substance used for filling and covering purposes.

## Revendications

1. Procédé pour la transformation d'un produit semi-fini en matière plastique pourvu de microcavités sur une face comportant les étapes :
- remplir et revêtir les microcavités dans le produit semi-fini en matière plastique avec une substance qui durcit,
- durcir la substance et travail par enlèvement de copeaux du coté qui n'est pas pourvu de microcavités du produit semi-fini en matière plastique, jusqu'à ce que les microcavités soient mises à nu au moins partiellement,
- éliminer sélectivement la substance durcie, des microcavités,
caractérisé en ce que
la substance pour le revêtement des microcavités durcit dans une plage de température entre 35°C et 180°C et en ce que l'élimination sélective de la substance des microcavités s'effectue à une température en dessous de 140°C.

2. Procédé selon la revendication 1,
caractérisé en ce que
le produit semi-fini en matière plastique est formé en polyoxyméthylène, polyéthersulfone, polycarbonate ou en polyétheréther cétone.

3. Procédé selon les revendications 1 et 2,
caractérisé par le fait
du remplissage et du revêtement des microcavités avec une substance qui fond entre 35°C et 140°C, de préférence avec un polyéthylèneglycol, un alcool polyvinylique ou un alcool supérieur.

4. Procédé selon les revendications 1 à 3,
caractérisé en ce que
l'élimination sélective de la substance qui a durci s'effectue avec un solvant - de préférence avec de l'eau - à une température en dessous de 60°C.

5. Procédé selon les revendications 1 et 2,
caractérisé par le fait
de remplir et de revêtir les microcavités avec une substance qui durcit par réaction chimique en dessous de 180°C, de préférence le polyméthacrylate de méthyle et par l'élimination sélective de la substance durcie par réaction chimique à une température en dessous de 140°C.

6. Procédé selon la revendication 1 à 5,
caractérisé par le fait qu'
on ajoute un colorant à la substance qui durcit, utilisée pour le remplissage et pour le recouvrement.
